# EUROPÄISCHE PATENTANMELDUNG

(11) **EP 1 788 381 A1**
(43) Veröffentlichungstag der Anmeldung: **23.05.2007**
(21) Anmeldenummer: 06024021.5
(22) Anmeldetag: 20.11.2006
(51) Int. Cl.: G01N 23/04, A61B 6/03

(54) **CT-Verfahren zur Aufnahme von Projektionsdaten**

(30) Priorität: 21.11.2005 DE 102005055423
(71) Anmelder: YXLON International X-Ray GmbH, 22419 Hamburg (DE)
(72) Erfinder: Münker, Martin, 58285 Gevelsberg (DE); Rokitta, Oliver, 58256 Ennepetal (DE); Helling, Matthias, 44627 Herne (DE)
(74) Vertreter: DTS München

(57) **Zusammenfassung**

Die Erfindung befasst sich mit einem CT-Verfahren zur Aufnahme von Projektionsdaten eines Prüfobjekts im Bereich nichtmedizinischer Anwendungen, insbesondere der zerstörungsfreien Prüfung, mittels Röntgenstrahlen, bei dem Projektionsdaten für verschiedene Winkelpositionen des Prüfobjekts akquiriert werden. Erfindungsgemäß ist vorgesehen, dass die Integrationszeit für die Aufnahme einer jeden Winkelposition von der Geometrie des Prüfobjekts und den Absorptionseigenschaften des Prüfobjekts in dieser Winkelposition abhängt.

## Beschreibung

Die Erfindung betrifft ein CT-Verfahren zur Aufnahme von Projektionsdaten eines Prüfobjekts im Bereich nicht-medizinischer Anwendungen, insbesondere der zerstörungsfreien Prüfung, mittels Röntgenstrahlen, bei dem Projektionsdaten für verschiedene Winkelpositionen des Prüfobjekts akquiriert werden.

Bei den bekannten CT-Messungen wird das Objekt in einem Strahlenfächer oder Strahlenkegel gedreht. Die Rotation erfolgt entweder schrittweise, wobei in definierten Winkelpositionen eine stets gleiche Zeitspanne verharrt, oder aber das Objekt kontinuierlich und mit Ausnahme der Beschleunigungsrampen gleichmäßig gedreht wird. Bei der kontinuierlichen Methode wird das Objekt also in gleichen Zeitintervallen um gleiche Winkel gedreht. Bei der schrittweisen Methode ist die Integrationszeit in jeder Winkelposition identisch.

Bei der kontinuierlichen Methode sind freie Ablaufbemessungen üblich, so dass die Ist-Position nicht mit dem Auslesen des Detektors synchronisiert wird und gerätebedingte Schwankungen der Drehgeschwindigkeit (Gleichlaufschwankungen) dabei weder erfasst noch korrigiert werden.

Die Rotationsgeschwindigkeit bzw. die Integrationszeit muss so eingestellt werden, dass die maximal erreichbare Auflösung bzw. das minimale Signal-Rausch-Verhältnis für jede Winkelposition - also auch für die ungünstigsten Positionen - erfüllt wird. Dadurch erhält man eine äußerst hohe Messzeit, da die Rotationsgeschwindigkeit bzw. die Integrationszeit auf den schlechtesten Fall ausgerichtet sein muss.

Aufgabe der Erfindung ist es deshalb, ein CT-Verfahren zur Verfügung zu stellen, mit dem bei inhomogenen Prüfobjekten eine Verkürzung der Messzeit bei gleich bleibender Qualität erreicht werden kann.

Diese Aufgabe wird durch ein CT-Verfahren mit den Merkmalen des Patentanspruchs 1 gelöst. Dadurch, dass die Integrationszeit für die Aufnahme einer jeden Winkelposition von der Geometrie des Prüfobjekts und den Absorptionseigenschaften dieses Prüfobjekts in dieser Winkelposition abhängt, wird eine Optimierung der gesamten Messzeit für das Prüfobjekt erreicht. Dadurch ist es möglich, in einer Winkelposition, in der nur eine sehr geringe Absorption erfolgt, mit einer kurzen Integrationszeit schnell zur nächsten Winkelposition überzugehen. Dagegen ist es möglich, in einer Winkelposition, in der eine hohe Absorption durch das Prüfobjekt auftritt, lange Zeit zu messen, so dass ein ausreichend gutes Messergebnis erzielt wird. Dadurch wird vermieden, dass Artefakte auftreten oder unnötig lange Zeit in einer bestimmten Winkelposition verweilt wird.

Eine vorteilhafte Weiterbildung der Erfindung sieht vor, dass zwischen den Winkelpositionen konstante Winkelschritte gegeben sind. Die Größe der Winkelschritte (bzw. die Anzahl der Projektionen) ist abhängig von der Anzahl der Detektorelemente (Nyquist-Shannon-Abtasttheorem).

Eine weitere vorteilhafte Weiterbildung der Erfindung sieht vor, dass die Aufnahme von Projektionsdaten mit einer konstanten Abtastrate erfolgt. Durch die Verwendung einer konstanten Abtastrate können einfachere Auswertungsverfahren der akquirierten Daten durchgeführt werden. Anstatt die Abtastrate an die Absorptionsverhältnisse des untersuchten Prüfteils anzupassen - es handelt sich insbesondere um die Durchdringbarkeit und das Signal-Rausch-Verhältnis - wird die Verweildauer an einem definierten Projektionswinkel im Stop&Go Modus oder eine modulierte Zeit zum Überstreichen eines Winkelbereichs bei kontinuierlicher Drehung bevorzugt.

Besonders bevorzugt werden bei fester Taktrate eines Bildaufnahmesystems mehrere Ergebnisse aufsummiert, die in einem vorgebbaren Winkelbereich um die dazugehörige Winkelposition liegen. Dadurch muss die Bewegung nicht an einer diskreten Winkelposition gestoppt werden, sondern es können in einem kontinuierlichen Verfahren mehrere Messungen einer Winkelposition zugerechnet werden, so dass für diese Winkelposition das Signal-Rausch-Verhältnis erhöht wird.

Eine weitere vorteilhafte Weiterbildung der Erfindung sieht vor, dass die Integrationszeit mit der Drehgeschwindigkeit einer Rotationseinheit variiert. Dadurch lässt sich erreichen, dass immer ein ausreichendes Signal-Rausch-Verhältnis oder eine Mindest-Zählrate erreicht wird.

Eine weitere vorteilhafte Weiterbildung der Erfindung sieht vor, dass während der Messung die Spannung und/oder die Stromstärke der Röntgenquelle konstant gehalten werden. Die konstante Spannung bewirkt, dass sich die Spektralverteilung der emittierten Röntgenstrahlung nicht ändert und somit keine komplizierten Korrekturrechnungen vorgenommen werden müssen. Das Konstanthalten der Stromstärke gewährleistet, dass die Streuverhältnisse und Abbildungseigenschaften des gesamten Systems nicht verändert werden.

Vorteilhafterweise wird in jeder Winkelposition so lange gemessen, bis ein vorgebbares minimales Signal-Rausch-Verhältnis erreicht wird. Dadurch wird sichergestellt, dass die Bildqualität in dieser Winkelposition ausreichend gut ist und keine Artefakte an dieser Stelle auftreten. Dadurch, dass dies für jede Winkelposition erfolgt, wird bei gleichzeitig minimaler Gesamtmesszeit ein für die Bildqualität benötigtes Signal-Rausch-Verhältnis an keiner Stelle unterschritten.

Weiterhin ist es vorteilhaft, wenn in jeder Winkelposition das gleiche Signal-Rausch-Verhältnis erreicht wird. Dadurch ist die Bildqualität durchgängig für alle Winkelpositionen gleich und somit wird für die eingestellte Bildqualität eine minimale Gesamtprüfdauer des Prüfobjekts erzielt.

Eine andere vorteilhafte Weiterbildung der Erfindung sieht vor, dass in jeder Winkelposition ein Signalwert erreicht wird, der zwischen einem vorgebbaren Minimalwert und einem vorgebbaren Maximalwert liegt. Mittels dieses Optimierungskriteriums wird erreicht, dass auf alle Fälle ein Offset, der geräteimmanent ist, überwunden wird und unterhalb eines Signalwerts geblieben wird, der den Detektor an den Rand seiner Aufnahmefähigkeit oder sogar darüber hinaus bringen würde.

Eine weitere vorteilhafte Weiterbildung der Erfindung sieht vor, dass eine Synchronisation zwischen einer Rotationseinheit und einem Bildaufnahmesystem der CT-Vorrichtung während der gesamten Aufnahme gegeben ist. Dadurch ist gewährleistet, dass insbesondere bei einer mehrstufigen Messung (siehe unten) oder bei einer Serienprüfung (siehe unten) immer eine exakte Zuordnung der Integrationszeit zu der jeweiligen Winkelposition möglich ist, auch wenn die CT-Vorrichtung Gleichlaufschwankungen unterliegt. Das erfindungsgemäße Verfahren ist somit auf jede CT-Vorrichtung anwendbar.

Eine weitere vorteilhafte Weiterbildung der Erfindung sieht vor, dass bei der Serienprüfung eines bekannten Objekts vorab mittels eines Referenzteils die Integrationszeiten für die einzelnen Winkelpositionen bestimmt werden und darauf die Rotationsgeschwindigkeit entsprechend variiert wird bzw. die Verweildauer in Abhängigkeit von der Winkelposition angepasst wird. Die für die jeweilige Winkelposition optimalen Bedingungen werden an einem oder mehreren Referenzteilen ermittelt und als Unterroutine des Prüfprogramms für den Scanverlauf hinterlegt. Bei einer kontinuierlichen Drehung wird dann die Drehgeschwindigkeit entsprechend moduliert. Bei einer Messung in definierten Winkelpositionen, auch als Stop&Go-Modus bezeichnet, wird die Verweildauer pro Prüfposition variiert. Als Optimierungskriterium ist hier das oben schon ausgeführte minimale Signal-Rausch-Verhältnis in allen Projektionen bzw. ein überall gleiches solches Signal-Rausch-Verhältnis bevorzugt.

Eine weitere vorteilhafte Weiterbildung der Erfindung sieht vor, dass bei der Prüfung eines unbekannten Objekts eine einstufige Messung durchgeführt wird, bei der die Projektionen in schneller Folge aufgenommen werden und in Abhängigkeit von bei einer In-Line-Auswertung erhaltenen Absorptionsdaten die Rotationsgeschwindigkeit entsprechend variiert wird bzw. die Verweildauer in der jeweiligen Winkelposition angepasst wird. Bei diesem Verfahren werden die Projektionen positionsgerecht in den Datensatz eingefügt. Ein durch die geringe Verzögerung trotzdem vorhandener Schleppfehler der Anpassung wird toleriert, da er nur sehr gering ausfällt. Die einstufige Messung ist insbesondere für Prüfobjekte mit mäßigen Absorptionsänderungen geeignet.

Eine weitere vorteilhafte Weiterbildung der Erfindung sieht vor, dass bei der Prüfung eines unbekannten Objekts eine mehrstufige Messung durchgeführt wird, indem eine schnelle Basismessung über alle Winkelpositionen durchgeführt wird und anschließend punktuell unter den Winkelpositionen weitere Projektionen durchgeführt werden, wo die Bildqualität noch nicht ausreichend ist. Anders als bei der zuvor beschriebenen einstufigen Messung gibt es hier keinen Schleppfehler, da nach der ersten schnellen Messung die Variationen der Drehgeschwindigkeit bzw. die jeweiligen Verweildauern in den definierten Winkelpositionen vorab berechnet und dann entsprechend angepasst bzw. angefahren werden können. Dadurch wird eine optimierte Bildqualität auch bei ausgeprägten Absorptionssprüngen erreicht. Dies bedeutet, dass in Winkelpositionen mit hohen Absorptionen ganz gezielt eine sehr lange Verweildauer bzw. eine äußerst geringe Rotationsgeschwindigkeit verwendet werden kann, dagegen kann in Winkelpositionen mit geringer Absorption die Verweildauer sehr kurz gehalten werden bzw. kann diese Winkelposition mit einer hohen Drehgeschwindigkeit durchfahren werden.

Sowohl für das Verfahren der einstufigen als auch der mehrstufigen Messung werden als Optimierungskriterien das Erreichen eines frei zu definierenden minimalen Signalwerts (der über dem Offset liegt) und/oder eines maximalen Signalwerts (der unterhalb des Werts liegt, den der Detektor nicht mehr ertragen kann) bzw. eines minimalen Signal-Rausch-Verhältnisses in allen Projektionen verwendet.

Die Messdaten können in allen Verfahren wahlweise positionsbezogen (feste Winkelschritte, unterschiedliche Integrationszeiten) oder zeitbezogen (feste Integrationszeit, variierende Winkelschritte) eingeordnet und für die anschließende oder mitlaufende Rekonstruktion entsprechend korrigiert werden. Bei allen Verfahren bestimmt sich die gesamte Messzeit als die aufintegrierte Zeit, die das Objekt entweder in jeder einzelnen Winkelposition verbringt (zuzüglich der Nebenzeiten, beispielsweise für die Positionierung und Detektorauslöse) oder in Abhängigkeit von den unterschiedlichen Rotationsgeschwindigkeiten für eine vollständige Umdrehung benötigt. Dadurch wird gegenüber den konventionellen, bekannten Methoden eine bedeutend schnellere Prüfung erreicht, da sich bei einer schrittweisen Messung nach den bekannten Verfahren als Gesamtmesszeit das Produkt der Anzahl von Projektionen (die Abtastrate) mit der konstanten Integrationszeit pro Projektion ergibt (hinzu treten natürlich noch die Nebenzeiten). Die Abtastrate definiert hierbei die maximal erreichbare Auflösung und kann nicht zu klein gewählt werden, da ansonsten Artefakte auftreten. Über die Integrationszeit wird direkt das Signal-Rausch-Verhältnis und damit das Nutzsignal beeinflusst. Da die Integrationszeit auf den worst case eingestellt werden muss, also diejenige Winkelposition, unter der die höchste Absorption auftritt, wird in den Positionen, in denen nur eine geringe Absorption auftritt, "viel zu lange" gemessen. Dadurch erhält man zwar ein sehr hohes Signal-Rausch-Verhältnis und auch ein großes Nutzsignal, dies ist jedoch nicht nötig, um eine korrekte Überprüfung des Prüfobjekts durchzuführen.

Der Zeitgewinn bei hinreichend guter Prüfungsqualität durch das erfindungsgemäße Verfahren ist insbesondere deshalb bei Prüfobjekten mit ausgeprägten Absorptionssprüngen frappierend. Aber auch bei Prüfobjekten mit nur mäßigen Absorptionsänderungen werden immer noch Gesamtprüfzeiten erreicht, die deutlich unter denjenigen liegen, die mit den bekannten CT-Verfahren erzielt werden.

## Patentansprüche

1. CT-Verfahren zur Aufnahme von Projektionsdaten eines Prüfobjekts im Bereich nicht-medizinischer Anwendungen, insbesondere der zerstörungsfreien Prüfung, mittels Röntgenstrahlen, bei dem Projektionsdaten für verschiedene Winkelpositionen des Prüfobjekts akquiriert werden,
**dadurch gekennzeichnet dass**
die Integrationszeit für die Aufnahme einer jeden Winkelposition von der Geometrie des Prüfobjekts und den Absorptionseigenschaften des Prüfobjekts in dieser Winkelposition abhängt.

2. Verfahren nach Patentanspruch 1, **dadurch gekennzeichnet, dass** zwischen den Winkelpositionen konstante Winkelschritte gegeben sind.

3. Verfahren nach einem der vorstehenden Patentansprüche, **dadurch gekennzeichnet, dass** die Aufnahme von Projektionsdaten mit einer konstanten Abtastrate erfolgt.

4. Verfahren nach einem der vorstehenden Patentansprüche, **dadurch gekennzeichnet, dass** bei fester Taktrate eines Bildaufnahmesystems mehrere Teilergebnisse aufsummiert werden, die in einem vorgebbaren Winkelbereich um die dazugehörige Winkelposition liegen und dieser zugeordnet werden.

5. Verfahren nach einem der vorstehenden Patentansprüche, **dadurch gekennzeichnet, dass** die Integrationszeit mit der Drehgeschwindigkeit einer Rotationseinheit variiert wird.

6. Verfahren nach einem der vorstehenden Patentansprüche, **dadurch gekennzeichnet, dass** während der Messung die Spannung und/oder die Stromstärke der Röntgenquelle konstant gehalten werden.

7. Verfahren nach einem der vorstehenden Patentansprüche, **dadurch gekennzeichnet dass** in jeder Winkelposition ein vorgebbares minimales Signal-Rausch-Verhältnis erreicht wird.

8. Verfahren nach einem der Patentansprüche 1 bis 6, **dadurch gekennzeichnet, dass** in jeder Winkelposition das gleiche Signal-Rausch-Verhältnis erreicht wird.

9. Verfahren nach einem der Patentansprüche 1 bis 6, **dadurch gekennzeichnet, dass** in jeder Winkelposition ein Signalwert erreicht wird, der zwischen einem vorgebbaren Minimalwert und einem vorgebbaren Maximalwert liegt.

10. Verfahren nach einem der vorstehenden Patentansprüche, **dadurch gekennzeichnet, dass** eine Synchronisation zwischen der Rotationseinheit und einem Bildaufnahmesystem der CT-Vorrichtung während der gesamten Aufnahme gegeben ist.

11. Verfahren nach einem der vorstehenden Patentansprüche, **dadurch gekennzeichnet, dass** bei der Serienprüfung eines bekannten Objekts vorab mittels eines Referenzteils die Integrationszeiten für die einzelnen Winkelpositionen bestimmt werden und darauf die Rotationsgeschwindigkeit entsprechend variiert wird bzw. die Verweildauer in Abhängigkeit von der Winkelposition angepasst wird.

12. Verfahren nach einem der Patentansprüche 1 bis 10, **dadurch gekennzeichnet, dass** bei der Prüfung eines unbekannten Objekts eine einstufige Messung durchgeführt wird, bei der die Projektionen in schneller Folge aufgenommen werden und in Abhängigkeit von bei einer In-Line-Auswertung erhaltenen Absorptionsdaten die Rotationsgeschwindigkeit entsprechend variiert wird bzw. die Verweildauer in der jeweiligen Winkelposition angepasst wird.

13. Verfahren nach einem der Patentansprüche 1 bis 10, **dadurch gekennzeichnet, dass** bei der Prüfung eines unbekannten Objekts eine mehrstufige Messung durchgeführt wird, indem eine schnelle Basismessung über alle Winkelpositionen durchgeführt wird und anschließend punktuell unter den Winkelpositionen weitere Projektionen durchgeführt werden, wo die Bildqualität noch nicht ausreichend ist.

14. Verfahren nach einem der vorstehenden Patentansprüche, **dadurch gekennzeichnet, dass** anstatt das Prüfobjekt in einer feststehenden CT-Vorrichtung zu rotieren, die CT Vorrichtung um ein feststehendes Objekt rotiert wird.
